# EUROPÄISCHE PATENTSCHRIFT

(11) **EP 0 947 248 B1**
(45) Veröffentlichungstag und Bekanntmachung des Hinweises auf die Patenterteilung: **12.02.2003**
(21) Anmeldenummer: 98102066.2
(22) Anmeldetag: 06.02.1998
(51) Int. Cl.: B01J 23/44, B01J 35/10, B01J 37/00, C10G 45/52

(54) **Katalysator zur Hydrierung von Aromaten in schwefelhaltigen Kohlenwasserstofffraktionen**
Catalyst for the hydrogenation of aromatics in sulfur-containing hydrocarbon fractions
Catalyseur pour l'hydrogenation d'aromatiques dans les fractions d'hydrocarbures contenant du soufre

(43) Veröffentlichungstag der Anmeldung: 06.10.1999
(73) Patentinhaber: KataLeuna GmbH Catalysts, 06236 Leuna (DE)
(72) Erfinder: John, Hans-Heino, Dr.rer.nat., 06120 Halle-Saale (DE); Birke, Peter, Prof. Dr.rer.nat., 06179 Langenbogen (DE); Neubauer, Hans-Dieter, Dr.rer.nat., 06217 Merseburg (DE)
(74) Vertreter: Schrell, Andreas, Dr.

(56) Entgegenhaltungen:
- EP-A- 0 587 246
- GB-A- 2 104 406
- US-A- 4 051 073
- US-A- 5 143 595
- US-A- 5 364 514

## Beschreibung

Die vorliegende Erfindung betrifft einen Katalysator zur Hydrierung von Aromaten in schwefelhaltigen Kohlenwasserstofffraktionen, ein Verfahren zu dessen Herstellung sowie ein Verfahren zur Hydrierung von Aromaten in schwefelhaltigen Kohlenwasserstofffraktionen.

Katalysatoren für die Hydrierung von Aromaten in schwefelhaltigen Kohlenwasserstofffraktionen sind bekannt. Aus Reinhoudt et al., "Hydrotreatment and hydrocracking of oil fractions", in Elsevier Science B.V., herausgegeben von Froment et al. 1997, sind Katalysatoren bekannt, die aus einer Kombination von Edelmetallen wie Platin oder Palladium mit einem porösen Träger bestehen. Diese Druckschrift beschreibt insbesondere Katalysatoren, die aus Platin und amorphem Alumosilikat oder Palladium und amorphem Alumosilikat aufgebaut sind. Beschrieben werden auch Katalysatoren, die Platin, Palladium und Aluminiumoxid enthalten. Die beschriebenen Katalysatoren weisen ausgezeichnete Aktivität bei der hydrierenden Zersetzung von Schwefelverbindungen in Kohlenwasserstofffraktionen auf. Über die Hydrierung von Aromaten wird in dieser Arbeit nichts berichtet.

Katalysatoren der Kombination Platin und Palladium auf einem kristallinen Alumosilikat mit Zeolith-Y-Struktur, die Aromaten in Gegenwart von Schwefelverbindungen hydrieren, werden in der EP 0 303 332 A1 und der EP 0 512 652 A1 beschrieben. Die Herstellung des verwendeten modifizierten Y-Zeolith erfordert ein aufwendiges, mehrere Schritte umfassendes Herstellungsverfahren. Die US-Patentschriften 5,147,526 und 5,151,172 betreffen ebenfalls kristalline Alumosilikate als Träger für eine Kombination der Edelmetalle Platin und Palladium. Die US-Patentschrift 5,271,828 beschreibt einen Palladium-Platin-Katalysator, der auf Borsilikat geträgert ist. Für die genannten porösen Trägermaterialien sind ebenfalls relativ aufwendige Herstellungsschritte erforderlich, die zu einer Verteuerung des Katalysators führen.

Aus der EP 0 587 246 K1 ist ein Katalysator zur Verwendung in Wasserstoffumwandlungsverfahren bekannt. Der Katalysator umfasst Palladium auf einem Siliciumdioxid-Aluminiumoxid-Träger, wobei der Träger aus einem amorphen Ausgangsmaterial mit einem Porenvolumen von mindestens 1,0 ml/g hergestellt wird. Der Katalysator kann auch Platin enthalten.

Das US-Patent 5,143,593 beschreibt ein Verfahren zum Hydrokracken von Mitteldestillaten mit einer Siedetemperatur von 180°C bis 360°C und eines oxidationsstabilen Rückstandes, der als Basisöl für Schmieröl geeignet ist. In dem Verfahren kommt ein Katalysator zum Einsatz, der aus amorphen Alumosilikaten als Trägermaterial und einem oder mehreren Metallen der Gruppen VIb und/oder VIII bestehen kann.

Aus der US 5,364,514 ist ein Verfahren zum Hydrokracken von schweren Kohlenwasserstoffen zu flüssigen aromatenarmen Produkten bekannt, das mehrere Stufen umfasst. In der zweiten Stufe wird ein Katalysator eingesetzt, der Palladium, Platin und Gemische davon auf beispielsweise einem amorphen Träger wie Siliciumdioxid-Aluminiumdioxid oder einem aus modifizierten Zeolith Y bestehenden kristallinen Träger umfasst.

Allgemein läßt sich also feststellen, daß zeolithhaltige Katalysatoren sehr teuer sind. Wenn ein katalytischer Prozeß zur Absenkung des Gehalts an Aromaten in Kohlenwasserstofffraktionen durchgeführt wird, so wie bei der Verringerung des Gehalts an Aromaten in Dieselöl, werden Katalysatorchargen von beträchtlichem Umfang benötigt. Diese werden für die beteiligten Raffinerien zu einem beträchtlichen Kostenfaktor.

Das der vorliegenden Erfindung zugrundeliegende technische Problem liegt also in der Bereitstellung eines Katalysators zur Hydrierung von Aromaten in schwefelhaltigen Kohlenwasserstofffraktionen, der einfach und kostengünstig herzustellen ist.

Die Erfindung löst dieses Problem durch die Lehre gemäß Anspruch 1, insbesondere durch die Bereitstellung eines Katalysators für die Hydrierung von Aromaten in schwefelhaltigen Kohlenwasserstofffraktionen, umfassend Platin, Palladium und einen glühfesten oxidischen porösen Träger, dadurch gekennzeichnet, dass der Träger ein amorphes Alumosilikat ist, das Alumosilikat 20 bis 40 Masse-% SiO₂ aufweist und das molare Verhältnis von Platin zu Palladium 0,25 bis 0,75 beträgt. Im Zusammenhang mit der vorliegenden Erfindung wird unter einem amorphen Alumosilikat ein Alumosilikat verstanden, das bei herkömmlicher Röntgenstrukturanalyse keinen kristallinen Charakter aufweist, also röntenamorphes Alumosilikat darstellt. Ein derartiger Katalysator weist den Vorteil auf, daß er ausgesprochen kostengünstig ist und zudem eine hohe Wirksamkeit, insbesondere im Hinblick auf Selektivität und Umsatzrate, bei der Hydrierung von Aromaten in schwefelhaltigen Kohlenwasserstofffraktionen aufweist. Der erfindungsgemäße Katalysator weist eine gute Standzeit auf und behält über eine lange Einsatzdauer seine Aktivität bei.

Die Erfindung betrifft einen Katalysator der vorgenannten Art, wobei das amorphe Alumosilikat 20 bis 40 Masse-% Siliziumdioxid aufweist und das molare Verhältnis von Platin zu Palladium 0,25 bis 0,75 beträgt.

In einer bevorzugten Ausführungsform betrifft die Erfindung einen der vorgenannten Katalysatoren, wobei der Katalysator 0,1 bis 10 Masse-% Platin enthält. Die Erfindung betrifft in bevorzugter Ausgestaltung auch einen der vorgenannten Katalysatoren, wobei der Katalysator 0,3 bis 20 Masse-% Palladium enthält.

Die Erfindung betrifft in einer weiteren bevorzugten Ausführungsform einen der vorgenannten Katalysatoren, wobei das amorphe Alumosilikat mindestens 0,4 cm³/g an Poren mit Radien von 2,0 bis 7,5 nm und weniger als 0,20 cm³/g an Poren mit Radien größer als 7,5 nm aufweist.

In einer weiteren, besonders bevorzugten Ausführungsform betrifft die Erfindung einen der vorgenannten Katalysatoren, wobei der amorphe Träger in Form von Formlingen eingesetzt wird, insbesondere in Form von Formlingen mit einem Durchmesser von 1,0 bis 3,0 mm, besonders bevorzugt 1,0 bis 1,5 mm.

In einer besonders bevorzugten Ausführungsform der Erfindung ist vorgesehen, daß das amorphe Alumosilikat, insbesondere die Formlinge bei einem Durchmesser von 1,0 bis 1,5 mm, ein Porenvolumen von 0,4 bis 0,7 cm³/g im Radienbereich von 2,0 bis 7,5 nm und weniger als 0,10 cm³/g im Radienbereich von 7,5 bis 50 nm und weniger als 0,02 cm³/g im Radienbereich von 50 bis 7500 nm aufweisen.

Die Erfindung betrifft in einer weiteren vorteilhaften Ausführungsform auch ein Verfahren zur Herstellung eines Katalysators zur Hydrierung von Aromaten in schwefelhaltigen Kohlenwasserstofffraktionen umfassend Platin und Palladium in einem molaren Verhältnis von Platin zu Palladium von 0,25 bis 0,75 und einen glühfesten oxidischen porösen Träger, der ein amorphes Alumosilikat mit 20 bis 40 Masse-% SiO₂ ist, wobei
a) amorphes Alumosilikat mit Tylose® als Plastifiziermittel unter Säureeinwirkung und gegebenenfalls Wasserzugabe vermischt wird, so dass eine plastische Masse entsteht,
b) die plastische Masse zu Formlingen extrudiert wird,
c) die Formlinge getrocknet,
d) kalziniert,
e) mit Platin und Palladium beladen und
f) anschließend getrocknet und kalziniert werden.

Die Erfindung betrifft demgemäß ein Verfahren zur Herstellung eines Katalysators, wobei amorphes Alumosilikat mit einem organischen Hilfsmittel, zum Beispiel einem Plastifiziermittel, unter Säureeinwirkung und gegebenenfalls Wasserzugabe vermischt wird, so daß eine plastische Masse entsteht, die plastische Masse zu einem Formling extrudiert wird, die Formlinge getrocknet, kalziniert, mit Platin und Palladium beladen und anschließend getrocknet und kalziniert werden.

Das amorphe Alumosilikat mit einem Gehalt an Siliziumdioxid von 20 bis 40 Masse-% wird nach bekannten Verfahren durch Vereinigung einer Aluminiumverbindung mit einer Siliziumverbindung hergestellt, zum Beispiel durch Ausfällung von vereinigten Lösungen von Aluminiumsalzen und Alkalisilikaten, Filtrieren der erhaltenen gelartigen Produkte, Waschen mit ionenarmen Wasser, bis störende Kationen und Anionen entfernt sind und Trocknen bei 80 °C bis 150 °C. Derartige Produkte sind kommerziell verfügbar, zum Beispiel unter der Bezeichnung Siral® der Firma CONDEA Chemie.

In bevorzugter Ausführungsform wird das röntgenamorphe Alumosilikat als Pulver in zum Beispiel einem Intensivmischer mit verdünnter Säure, vorzugsweise Salpetersäure, und einem organischen Hilfsmaterial, das die Plastifizierung der Masse fördert, vermengt. In vorteilhafter Ausgestaltung der Erfindung können auch 1 bis etwa 20 Masse-% Al₂O₃, bezogen auf die wasserfreie Mischung, als Böhmit (feinteiliges Aluminiumoxidhydroxid) zugegeben werden. Es wird in bevorzugter Weise soviel Wasser zugefügt, daß eine Masse entsteht, die mit üblichen Strangpressen zu Formlingen extrudiert werden kann. Die Masse wird zum Beispiel mittels einer bekannten Schneckenstrangpresse durch Düsen gepreßt, wobei stäbchenförmige Formlinge von 1 bis 3 mm Durchmesser erzeugt werden, die auch ein spezielles Querschnittsprofil aufweisen können. Selbstverständlich kann der amorphe Träger auch andere Größen und/oder Geometrien aufweisen, beispielsweise als Kügelchen vorliegen. Nach der Extrusion werden die Formlinge, vorzugsweise bei 80 bis 120 °C, getrocknet und, vorzugsweise bei 350 bis 600 °C, kalziniert. Nach der Kalzinierung entsteht in den Formlingen ein Porensystem, in das die Kohlenwasserstoffe in das Katalysatorkorn eintreten können, an den aktiven Zentren umgewandelt werden und die umgewandelten Moleküle aus dem Porensystem wieder austreten können.

Nach der Kalzinierung werden die Aiumosilikatformlinge nach bekannten Verfahren mit Verbindungen des Platins und des Palladiums beladen. Geeignete Verfahren zur Beladung der Formlinge mit den Edelmetallen umfassen die Tränkung der Formlinge mit wasserlöslichen Verbindungen, zum Beispiel H₂PdCl₄ und H₂PtCl₆ in Gegenwart von Salzsäure oder den Eintausch von kationischen Platin- und Palladiumverbindungen als entsprechende Aminverbindungen. Derartige Verfahren sind bekannt.

Nach dem Beladen der Formlinge mit den Edelmetallverbindungen werden sie, vorzugsweise bei 80 bis 150°C, an der Luft getrocknet und, vorzugsweise bei 300 bis 550 °C, erneut kalziniert, um die Edelmetalle auf der inneren Oberfläche in den Poren des röntgenamorphen Alumosilikates zu fixieren. Die Katalysatoren werden nach dem Einbau in den Reaktionsreaktor und vor dem Gebrauch bei Temperaturen zwischen vorzugsweise 300 und 500 °C mit Wasserstoff reduziert.

Die Erfindung betrifft in einer weiteren Ausführungsform auch ein Verfahren zur Hydrierung von Aromaten in schwefelhaltigen Kohlenwasserstofffraktionen, wobei die schwefelhaltige Kohlenwasserstofffraktion zusammen mit Wasserstoff unter erhöhtem Druck und erhöhter Temperatur über einen der vorgenannten erfindungsgemäßen Katalysatoren geführt wird. In besonders bevorzugter Ausführungsform der Erfindung ist ein vorgenanntes Verfahren zur Hydrierung vorgesehen, wobei die erhöhten Temperaturen 50°C bis 390°C, insbesondere 150 C° bis 390 °C, vorzugsweise 220 und 330 °C betragen. In einer weiteren bevorzugten Ausführungsform der Erfindung ist ein vorgenanntes Verfahren zur Hydrierung von Aromaten vorgesehen, wobei der erhöhte Wasserstoff-Druck 20 bis 100 bar, vorzugsweise mindestens 30 bar, beträgt.

In bevorzugter Ausführungsform der Erfindung, das heißt des Verfahrens zur Hydrierung von Aromaten, beträgt der Durchsatz über dem Katalysator 0,5 bis 5 v/vh, ausgedrückt in m³ Rohstoff pro m³ Katalysator und Stunde. In einer besonders bevorzugten Ausführung der Erfindung ist, insbesondere für die Aromatenhydrierung in leichten Dieselölfraktionen, eine Belastung von 2 v/vh vorgesehen.

Die vorliegende Erfindung sieht in einer weiteren Ausgestaltung eines der vorgenannten Verfahren zur Hydrierung von Aromaten vor, wobei das Verhältnis von Wasserstoff zu Kohlenwasserstoff 100 bis 1000 : 1 Nm³/m³, vorzugsweise 300 und 1000 : 1 Nm³/m³ beträgt.

Je nach Gehalt an Aromaten, Struktur der Aromaten und Gehalt an Heteroatomverbindungen im Rohstoff sowie je nach Siedebereich der Kohlenwasserstofffraktionen können jedoch auch andere Reaktionsbedingungen vorgesehen sein. Im allgemeinen sind mit zunehmender Siedelage und mit zunehmender Menge an Heteroatomverbindungen im Rohstoff die Reaktionsbedingungen zu verschärfen, das heißt in Richtung auf einen höheren Wasserstoff-Partialdruck, höhere Temperaturen, höhere H₂:Rohstoff-Verhältnisse und niedrigere Durchsätze.

In Abhängigkeit von dem Gehalt an Schwefel und Stickstoff in den Kohlenwasserstofffraktionen ist erfindungsgemäß bevorzugt vorgesehen, die Gehalte an Heteroatomverbindungen durch hydrierende Behandlung, zum Beispiel an Katalysatoren des Typs Co-Mo-Al₂O₃ oder Ni-Mo-Al₂O₃, auf Werte von unter 1000 ppm an Schwefel und 50 ppm an Stickstoff abzusenken.

Besonders bevorzugt ist es, bei der Hydrierung der Aromaten den Schwefelgehalt und den Stickstoffgehalt noch weiter abzusenken, zum Beispiel auf Werte unter 100 ppm Schwefel und 5 ppm Stickstoff.

Die Erfindung sieht insbesondere ein vorgenanntes Verfahren vor, wobei nach Einstellung der Reaktionstemperatur der Kohlenwasserstoffstrom zusammen mit Wasserstoff unter erhöhtem Druck durch ein Katalysatorbett geleitet wird. Die bei der Hydrierung der Aromaten auftretene hohe Exothermie kann durch Zugabe von Kaltgas oder kaltem Rohstoff in Reaktionszonen des Reaktors verringert werden. Es ist selbstverständlich erfindungsgemäß auch möglich, den Kohlenwasserstoffstrom zweimal oder mehrmals über den Katalysator zu führen und nur soviel Aromaten umzusetzen, daß der Temperaturanstieg nicht zu hoch ist.

Nach Rückkehr von einer Belastung mit höheren Schwefelmengen auf niedrige Schwefelmengen im Rohstoff erreicht der Katalysator in vorteilhafter Weise seine vorherige ursprüngliche Aktivität wieder. Es treten dann nur unwesentliche Mengen an höheren Spaltprodukten auf. Durch eine Wasserstoffbehandlung der erfindungsgemäßen Katalysatoren wird in Form von Metallsulfiden des Pt und Pd aufgenommener Schwefel wieder abgelöst und somit die Aktivität weitgehend reversibel zurückgewonnen. Durch Abbrennen von wasserstoffarmen Kohlenstoffverbindungen (Koks), die die Zugänglichkeit der aktiven Zentren des erfindungsgemäßen Katalysators blockieren, mit Sauerstoff kann der Katalysator regeneriert werden. Die Erfindung betrifft daher auch diesen Aspekt, das heißt die Möglichkeit, den Katalysator zu regenerieren.

Weitere vorteilhafte Ausgestaltungen der Erfindung ergeben sich aus den Unteransprüchen.

Die Erfindung wird anhand der nachfolgenden Beispiele näher erläutert.

### Beispiel 1

### 1. Herstellung der Trägerformlinge

### Trägerformlinge a)

6000 g röntgenamorphes Alumosilikat mit ca. 20 Masse-% SiO₂, bezogen auf Trockenbasis (Siral® 20 der Firma CONDEA Chemie), 600 g Pural® SB III der Firma CONDEA Chemie (Pseudoböhmit), 330 g Tylose®, 2036 ml Salpetersäure mit einem HNO₃-Gehalt von 127,7 g/l und 4885 ml Wasser wurden zusammen in einem Intensivmischer vermengt. Es wurde eine plastifizierte Masse erhalten, die mittels einer Schneckenstrangpresse durch Düsen mit 1,5 mm Durchmesser zu Extrudaten geformt wurde. Die Extrudate wurden 5 Stunden bei 80-120°C getrocknet, auf eine Länge von 4-7 mm gebrochen und 5 h bei 500 °C in einem Muffelofen kalziniert.

### Trägerformlinge b)

6000 g röntgenamorphes Alumosilikat mit 20 Masse-% SiO₂, bezogen auf Trockenbasis (Siral® 20 der Firma CONDEA Chemie), 600 g Pseudoböhmit-Pulver (Pural® SB III der Firma CONDEA Chemie), 500 g Tylose®, 2036 ml Salpetersäure mit einem HNO₃-Gehalt von 127,7 g/l und 4835 ml Wasser wurden in einem Intensivmischer vermengt. Die Formung und thermische Nachbehandlung wurde analog wie bei der Herstellung der Trägerformlinge a) durchgeführt.

### Trägerformlinge c)

200 g röntgenamorphes Alumosilikat mit 40 Masse-% SiO₂, bezogen auf Trockenbasis (Siral® 40 der Firma CONDEA Chemie, 15 g Tylose®, 62 ml verdünnte Salpetersäure (125,8 g HNO₃/l) und 85 ml Wasser wurden intensiv miteinander vermischt.

Die Formung und thermische Nachbehandlung wurde analog wie bei der Herstellung der Trägerformlinge a) durchgeführt.

| Tabelle Porenverteilung der Formlinge | | | |
|---|---|---|---|
| Trägerformlinge | PV in cm³/g | | |
| Porenradien | 2,5 - 7,5 nm | 7,5 - 50 nm | 50 - 7500 nm |
| a) | 0,60 | 0,07 | 0,05 |
| b) | 0,63 | 0,03 | 0,01 |
| c) | 0,52 | 0,08 | 0,15 |

### 2. Tränkung der Formlinge

150 g der Trägerformlinge a), b) und c) wurden mit einer Lösung gemäß einfacher Wasseraufnahmekapazität imprägniert, die folgende Komponenten enthielt: 1,129 g PdCl₂ wurden mit 4,0 ml Salzsäure (37%ig) gelöst. 8,18 g H₂PtCl₆-Lösung mit 4,9 % Pt wurden hinzugegeben. Die Lösung wurde auf die zuvor ermittelte Wasseraufnahmekapazität des Trägers aufgefüllt und unter Bewegung gleichmäßig auf die Trägerformlinge aufgesprüht. Unter weiterer Bewegung wurden die Formlinge bei Temperaturen von 120 °C getrocknet. Sie wurden anschließend 5 Stunden im elektrischen Trockenschrank bei 120 °C nachgetrocknet und dann in einer Muffel auf Drahtblechen unter langsamer Durchströmung von Luft auf 500 °C mit 100 °C/h aufgeheizt und 3 h bei 500 °C belassen.
Auf diese Weise wurden aus den Trägerformlingen
a) der Katalysator A
b) der Katalysator B und
c) der Katalysator C
hergestellt.

Zum Vergleich wurden die Trägerformlinge b) nur mit einer Lösung von H₂PtCl₆ getränkt (unter Verzicht auf die Zugabe von PdCl₂) und genauso behandelt wie die vorhergehende Katalysatoren A bis C. Der sich ergebende Katalysator, der nur Platin als Hydrierkomponente enthielt, hat die Bezeichnung D.

Zusammensetzung der Katalysatoren gemäß Analyse:

| Katalysator | Pt in Masse-% auf Trockenbasis | Pd in Masse-% auf Trockenbasis |
|---|---|---|
| A | 0,32 | 0,44 |
| B | 0,31 | 0,45 |
| C | 0,30 | 0,45 |
| D | 0,32 | 0,00 |

### Beispiel 2:

### Prüfung der Aktivität der Katalysatoren

Die Katalysatoren wurden in einer Menge von 50 ml in zerkleinerter Form in einen Durchflußreaktor eingebaut. Über die Katalysatoren wurden Kohlenwasserstoffströme mit unterschiedlichen Schwefelgehalten unter hydrierenden Bedingungen geleitet.

### Experimente mit Katalysator A:

- Umsetzung eines synthetischen Kohlenwasserstoffgemisches aus 21 % C₈-Aromaten in Cyclohexan und Zusätzen an Thiophen

| | |
|---|---|
| Druck | 1,5 Mpa; 3,5 Mpa; 5,0 Mpa |
| H₂-Gehalt | 99,0 Vol.-% |
| Temperatur | 250 °C; 280 °C; 300 °C |
| Durchsatz | 100 ml Kohlenwasserstoffgemisch pro Stunde, entspricht LHSV von 2,0 h⁻¹ |
| Gas: | |
| Kohlenwasserstoff-Verhältnis | 500 : 1 N l/l |

### Ergebnisse:

| Druck in MPa | Temperatur in °C | S in ppm (als Thiophen) | Aromaten in Masse-% |
|---|---|---|---|
| 2,5 | 250 | 0 | 1,2 |
| 2,5 | 280 | 50 | 3,5 |
| 2,5 | 300 | 100 | 3,5 |
| 3,5 | 300 | 200 | 4,0 |
| 5,0 | 300 | 200 | 2,5 |

- Umsetzung eines Schwerbenzins mit 0,03 Masse-% Schwefel; Aromatengehalte 15 Masse-%

| Belastung v/vh | Druck in MPa | Temperatur in °C | Masse-% Aromaten |
|---|---|---|---|
| 1,0 | 5,0 | 300 | 4,0 |

- Umsetzung eines leichten Gasöls

### Eigenschaften:

| | |
|---|---|
| Schwefelgehalt | 43 ppm |
| Basengehalt | 2,5 mg NH₃/l |
| Aromatengehalt | 25,5 Vol.-% |
| Dichte bei 20 °C | 0,837 g/l |

| Belastung v/vh | Druck MPa | Temperatur in °C | Dichte g/l | Masse-% Aromaten |
|---|---|---|---|---|
| 1 | 5,0 | 320 | 0,820 | 2,5 |
| 2 | 5,0 | 320 | 0,824 | 4,0 |
| 2 | 3,5 | 320 | 0,826 | 8,5 |

Aus dem Hydrierergebnis wird deutlich, daß der Katalysator in Gegenwart von Schwefel (als Thiophen) bei technisch anwendbaren Bedingungen die Aromaten hydriert.

Es wurde während eines Versuchsablaufs von 660 Stunden ermittelt, daß der Katalysator seine Aktivität beibehält und nach der Rückkehr von der Belastung mit höheren Schwefelmengen auf niedrigere Schwefelmengen im Rohstoff reversibel seine vorherige Aktivität wieder erreicht. Es treten nur unwesentliche Mengen an höheren Spaltprodukten auf.

### Katalysator B

- Umsetzung eines leichten Gasöls

| Eigenschaften: | |
|---|---|
| Schwefelgehalt | 43 ppm |
| Basenzahl | 2,5 mg NH₃/l |
| Aromatengehalt | 25,5 Vol.-% |
| Dichte bei 20 °C | 0,837 g/l |

### Ergebnisse

| Belastung v/vh | Druck MPa | Temperatur in °C | Dichte g/l | Masse-% Aromaten |
|---|---|---|---|---|
| 1 | 5,0 | 290 | 0,819 | 2,3 |
| 2 | 5,0 | 310 | 0,822 | 3,9 |

Der Katalysator B erreicht eine noch höhere Leistung als der Katalysator A.

### Katalysator C

- Umsetzung eines leichten Gasöls

| Eigenschaften: | |
|---|---|
| Schwefelgehalt | 43 ppm |
| Basenzahl | 2,5 mg NH₃/l |
| Aromatengehalt | 25,5 Vol.-% |
| Dichte bei 20 °C | 0,837 g/l |

### Ergebnisse:

| Belastung v/vh | Druck MPa | Temperatur in °C | Dichte g/l | Masse-% Aromaten |
|---|---|---|---|---|
| 1 | 5,0 | 290 | 0,810 | 2,0 |
| 2 | 5,0 | 315 | 0,821 | 4,0 |

### Katalysator D (Vegleichskatalysator)

- Umsetzung eines synthetischen Kohlenwasserstoffgemisches aus 21 % C₈-Aromaten in Cyclohexan und Zusätzen an Thiophen

### Ergebnisse:

50 ppm Schwefel (S) zugesetzt in Form von Thiophen

| Druck in MPa | Temperatur in °C | S in ppm (im Rohstoff) | Aromaten in Masse-% |
|---|---|---|---|
| 5.0 | 300 | 0 | 2,5 |
| 5,0 | 300 | 50 | 9,0 |

Der Vergleichskatalysator hat in Gegenwart von Schwefelverbindungen eine deutlich herabgesetzte Hydrierwirkung gegenüber dem Katalysator A.

## Patentansprüche

1. Katalysator für die Hydrierung von Aromaten in schwefelhaltigen Kohlenwasserstofffraktionen, umfassend Platin, Palladium und einen glühfesten oxidischen porösen Träger, **dadurch gekennzeichnet, daß** der Träger ein amorphes Alumosilikat ist, das Alumosilikat 20 bis 40 Masse-% SiO₂ aufweist und das molare Verhältnis von Platin zu Palladium 0,25 bis 0,75 beträgt.

2. Katalysator nach Anspruch 1, **dadurch gekennzeichnet, daß** der Katalysator 0,1 bis 10 Masse-% Platin und/oder 0,3 bis 2,0 Masse-% Palladium enthält.

3. Katalysator nach Anspruch 1 oder 2, **dadurch gekennzeichnet, daß** der Katalysator ein Porenvolumen von mindestens 0,4 cm³/g im Porenradienbereich von 2,0 bis 7,5 nm und ein Porenvolumen von weniger als 0,20 cm³/g im Porenradienbereich von 7,5 bis 7500 nm aufweist.

4. Katalysator nach einem der vorhergehenden Ansprüche, **dadurch gekennzeichnet, daß** der Katalysator ein Porenvolumen von 0,4 bis 0,7 cm³/g im Porenradienbereich von 2,0 bis 7,5 nm und weniger als 0,10 cm³/g im Porenradienbereich von 7,5 bis 50 nm sowie weniger als 0,02 cm³/g im Porenradienbereich von 50 bis 7500 nm aufweist.

5. Verfahren zur Herstellung eines Katalysators zur Hydrierung von Aromaten in schwefelhaltigen Kohlenwasserstofffraktionen umfassend Platin und Palladium in einem molaren Verhältnis von Platin zu Palladium von 0,25 bis 0,75 und einen glühfesten oxidischen porösen Träger, der ein amorphes Alumosilikat mit 20 bis 40 Masse-% SiO₂ ist, wobei
a) amorphes Alumosilikat mit einem Plastifiziermittel unter Säureeinwirkung und gegebenenfalls Wasserzugabe vermischt wird, so daß eine plastische Masse entsteht,
b) die plastische Masse zu Formlingen extrudiert wird,
c) die Formlinge getrocknet,
d) kalziniert,
e) mit Platin und Palladium beladen und
f) anschließend getrocknet und kalziniert werden.

6. Verfahren nach Anspruch 5, wobei die Säureeinwirkung mittels verdünnter Salpetersäure durchgeführt wird.

7. Verfahren nach Anspruch 5 oder 6, wobei dem mit dem Plastifiziermittel vermischten amorphen Alumosilikat 1 bis 20 Masse-% Al₂O₃, bezogen auf die wasserfreie Mischung, als Böhmit zugegeben werden.

8. Verfahren nach einem der Ansprüche 5 bis 7, wobei die Formlinge 1 bis 3 mm Durchmesser aufweisen.

9. Verfahren nach einem der Ansprüche 5 bis 8, wobei die Formlinge vor dem Beladen bei 80 bis 120°C getrocknet werden.

10. Verfahren nach einem der Ansprüche 5 bis 9, wobei die Formlinge vor dem Beladen bei 350 bis 600°C kalziniert werden.

11. Verfahren nach einem der Ansprüche 5 bis 10, wobei die Formlinge nach dem Beladen bei 80 bis 150°C getrocknet werden.

12. Verfahren nach einem der Ansprüche 5 bis 11, wobei die Formlinge nach dem Beladen bei einer Temperatur von 300 bis 550 °C kalziniert werden.

13. Verfahren zur Hydrierung von Aromaten in schwefelhaltigen Kohlenwasserstoff-Fraktionen, wobei die schwefelhaltigen Kohlenwasserstoff-Fraktionen zusammen mit Wasserstoff unter erhöhtem Druck und unter erhöhter Temperatur über einen der Katalysatoren gemäß der Ansprüche 1 bis 4 geführt werden.

14. Verfahren nach Anspruch 13, wobei die erhöhte Temperatur 50 °C bis 390 °C beträgt.

15. Verfahren nach einem der Ansprüche 13 oder 14, wobei der erhöhte Wasserstoff-Druck 20 bis 100 bar beträgt.

## Claims

1. Catalyst for the hydrogenation of aromatics in hydrocarbon fractions containing sulphur, comprising platinum, palladium and a calcination-resistant oxidic porous carrier, **characterised in that** the carrier is an amorphous aluminosilicate, the aluminosilicate has 20 to 40% by mass of SiO₂ and the molar ratio of platinum to palladium amounts to 0.25 to 0.75.

2. Catalyst according to claim 1, **characterised in that** the catalyst contains 0.1 to 10% by mass of platinum and/or 0.3 to 2.0% by mass of palladium.

3. Catalyst according to claim 1 or 2, **characterised in that** the catalyst has a pore volume of at least 0.4 cm³/g in the pore radius range of 2.0 to 7.5 nm and a pore volume of less than 0.20 cm³/g in the pore radius range of 7.5 to 7500 nm.

4. Catalyst according to one of the preceding claims, **characterised in that** the catalyst has a pore volume of 0.4 to 0.7 cm³/g in the pore radius range of 2.0 to 7.5 nm and less than 0.10 cm³/g in the pore radius range of 7.5 to 50 nm and also less than 0.02 cm³/g in the pore radius range of 50 to 7500 nm.

5. Process for the production of a catalyst for the hydrogenation of aromatics in hydrocarbon fractions containing sulphur, comprising platinum and palladium in a molar ratio of platinum to palladium of 0.25 to 0.75 and a calcination-resistant oxidic porous carrier, which is an amorphous aluminosilicate with 20 to 40% by mass of SiO₂, wherein
a) amorphous aluminosilicate is mixed with plasticiser under the action of acid and if necessary with the addition of water, so that a plastic mass is formed,
b) the plastic mass is extruded to form moulded blanks,
c) the moulded blanks are dried,
d) calcined,
e) charged with platinum and palladium, and
f) subsequently dried and calcined.

6. Process according to claim 5, wherein the acid action is performed by means of diluted nitric acid.

7. Process according to claim 5 or 6, wherein 1 to 20% by mass of Al₂O₃, calculated on the basis of the water-free mixture, in the form of boehmite is added to the amorphous aluminosilicate mixed with the plasticiser.

8. Process according to one of claims 5 to 7, wherein the moulded blanks have a diameter of 1 to 3 mm.

9. Process according to one of the claims 5 to 8, wherein the moulded blanks are dried at 80 to 120°C before charging.

10. Process according to one of the claims 5 to 9, wherein the moulded blanks are calcined at 350 to 600°C before charging.

11. Process according to one of claims 5 to 10, wherein the moulded blanks are dried at 80 to 150°C after charging.

12. Process according to one of the claims 5 to 11, wherein the moulded blanks are calcined at a temperature of 300 to 550°C after charging.

13. Process for the hydrogenation of aromatics in hydrocarbon fractions containing sulphur, wherein the hydrocarbon fractions containing sulphur are directed together with hydrogen over one of the catalysts according to claims 1 to 4 at elevated pressure and at elevated temperature.

14. Process according to claim 13, wherein the elevated temperature amounts to 50°C to 390°C.

15. Process according to one of claims 13 or 14, wherein the elevated hydrogen pressure amounts to 20 to 100 bar.

## Revendications

1. Catalyseur pour l'hydrogénation d'aromates dans des fractions d'hydrocarbures contenant du soufre, comprenant du platine, du palladium et un support poreux réalisé par voie d'oxydation et résistant à la calcination, **caractérisé en ce que** le support est un silicate d'aluminium qui contient de 20 à 40 % en masse de SiO₂ et le rapport molaire du platine au palladium est de 0,25 à 0,75.

2. Catalyseur selon la revendication 1, **caractérisé en ce qu'**il contient de 0,1 à 10 % en masse de platine et/ou 0,3 à 2,0 % en masse de palladium.

3. Catalyseur selon l'une quelconque des revendications 1 ou 2, **caractérisé en ce que** le catalyseur présente un volume de pores qui est d'au moins 0,4 cm³/g dans la plage de rayons des pores s'étendant de 2,0 à 7,5 nm, et un volume de pores inférieur à 0,20 cm³/g dans la plage de rayons s'étendant de 7,5 à 7500 nm.

4. Catalyseur selon l'une quelconque des revendications précédentes, **caractérisé en ce que** le catalyseur présente un volume de pores de 0,4 à 0,7 cm³/g dans la plage de rayons des pores s'étendant de 2,0 à 7,5 nm, et moins de 0,10 cm³/g dans la plage de rayons de 7,5 à 50 nm ainsi que moins de 0,02 cm³/g dans la plage de rayons de 50 à 7500 nm.

5. Procédé de fabrication d'un catalyseur d'hydrogénation d'aromates dans des fractions d'hydrocarbures contenant du soufre, comprenant du platine et du palladium dans un rapport molaire du platine au palladium de 0,25 à 0,75 et un support poreux réalisé par voie d'oxydation et résistant à la calcination, qui est un silicate amorphe d'aluminium contenant de 20 à 50 % en masse de SiO₂, selon lequel :
a) du silicate amorphe d'aluminium est mélangé à un agent plastifiant sous action acide et éventuellement addition d'eau, de manière à former une masse plastique,
b) la masse plastique est extrudée en ébauches,
c) les ébauches sont séchées,
d) calcinées,
e) chargées de platine et de palladium, et
f) à nouveau séchées et calcinées.

6. Procédé selon la revendication 5, **caractérisé en ce que** l'action acide est produite par de l'acide nitrique dilué.

7. Procédé selon l'une quelconque des revendications 5 ou 6, **caractérisé en ce qu'**au silicate amorphe d'aluminium mélangé au plastifiant, on ajoute de 1 à 20 % en masse d'Al₂O₃ par rapport au mélange anhydre, sous forme de böhmite.

8. Procédé selon l'une quelconque des revendications 5 à 7, **caractérisé en ce que** les ébauches ont un diamètre de 1 à 3 mm.

9. Procédé selon l'une quelconque des revendications 5 à 8, **caractérisé en ce que** les ébauches, avant d'être chargées, sont séchées à une température allant de 80° à 120°C.

10. Procédé selon l'une quelconque des revendications 5 à 9, **caractérisé en ce que** les ébauches, avant d'être chargées, sont calcinées à une température allant de 350° à 600°C.

11. Procédé selon l'une quelconque des revendications 5 à 10, **caractérisé en ce que** les ébauches, après avoir été chargées, sont séchées à une température allant de 80° à 150°C.

12. Procédé selon l'une quelconque des revendications 5 à 11, **caractérisé en ce que** les ébauches, après avoir été chargées, sont calcinées à une température allant de 300° à 550°C.

13. Procédé d'hydrogénation d'aromates dans des fractions d'hydrocarbures contenant du soufre, ces fractions étant amenées avec de l'hydrogène sous haute pression et à température élevée, sur un des catalyseurs selon l'une quelconque des revendications 1 à 4.

14. Procédé selon la revendication 13, dans lequel la température élevée est de 50° à 390°C.

15. Procédé selon l'une quelconque des revendications 13 ou 14, **caractérisé en ce que** la pression élevée de l'hydrogène est de 20 à 100 bars.
